# EUROPEAN PATENT APPLICATION

(11) **EP 4 796 507 A1**
(43) Date of publication of application: **26.08.2026**
(21) Application number: 26153395.4
(22) Date of filing: 22.01.2026
(51) Int. Cl.: C03B 3/02, C03B 5/00, F28D 7/16, F28F 5/02

(54) **ROTARY HEAT EXCHANGER SURFACE CONDITIONING APPARATUS AND METHOD**

(30) Priority: 21.02.2025 US 202563761277 P
(71) Applicant: Alexander, Jeffrey C., Newbury, MA 01951 (US)
(72) Inventor: Alexander, Jeffrey C., Newbury, MA 01951 (US)
(74) Representative: Uexküll & Stolberg

(57) **Abstract**

Rotary heat-exchanger including a rotatable chamber; at least one heat exchange tube in the rotatable chamber and having a tube length defined between a first tube end and a second tube end spaced from the first end, and having an inside tube diameter and an outside tube diameter; a first tube plate attached to the first end of the at least one tube and a second tube plate attached to the second end of the at least one tube, and an outlet attached to the second tube plate and in communication with the rotatable chamber; a feeder in communication with the rotatable chamber; and at least one bar in the at least one heat exchange tube, the at least one bar having a bar length greater than the tube length and being free to move in the at least one heat exchange tube upon rotation of the rotatable chamber.

## Description

This application claims priority of U.S. Provisional Application Serial No. 63/761,277 filed on February 21, 2025, the disclosure of which is incorporated herein by reference in its entirety.

### BACKGROUND

Embodiments disclosed herein relate to a rotary heat exchanger which can be used for preheating raw materials for glass manufacture using waste heat from the glass melting process.

Glass is made by heating and melting a mixture of solid raw materials to a liquid state. The melting is done inside of a furnace and necessarily requires substantial amounts of heat. Typically, this heat is generated by the combustion of fossil fuels and the exhaust gases from the combustion leave the furnace. Exhaust gas temperatures immediately after the furnace are quite high, typically 1350-1450°C. In some cases, combustion air preheaters are included which recover some of the heat in these gases. Even so, gas temperatures at the discharge to atmosphere are quite high, thus substantial amounts of heat are wasted. The cost of fuel for heating the furnace is a major component in the cost of making glass.

The raw materials for soda lime glass are typically referred to as batch and cullet. The word batch generally refers to an assemblage of various pulverous materials including silica sand, limestone, soda ash, salt cake, and a variety of other minor ingredients. The material and mixture ratios are carefully chosen to produce glass of the desired properties and quality. Generally, these materials are prepared in a finely divided form to promote their melting rates. Sizes are typically 100 to 200 µm diameter with a maximum size of 1 mm.

The word cullet generally refers to recycled glass, either from the factory or from external sources. Cullet from the factory is typically less than 10% of the production rate of the furnace and is generated by product breakage, or product rejected due to defects. Factory cullet is gathered from the various sources in the plant, crushed to sizes less than 100 mm and collected in a central storage hopper.

Cullet from external sources, referred to as Post-Consumer Recycle (PCR) cullet generally comes from glass bottle recycling programs in the community. The amount of PCR cullet in each furnace can vary widely, from as little as 0% of production rate up to 80%. PCR cullet is generally laden with impurities such as organic residues, paper, plastics, and other non-glass materials deposited into recycling containers. PCR cullet is delivered to the glass factory by truck or rail carriers from the recycling centers. PCR cullet is normally delivered in a coarse crushed form of size less than 100 mm.

The batch, factory cullet and PCR cullet are typically blended before introduction to the melting furnace.

The rotary heat-exchanger can be advantageously used to preheat the batch and the cullet using heat from the exhaust gases and will result in an improved glass melting process. By preheating these materials before they are introduced to the furnace, the amount of fuel required for heating and melting them can be reduced. This fuel reduction can represent a substantial economic benefit to the glass making process and reduces the emission of harmful gases (such as NOx and CO₂) simply because less fuel is burned.

Fossil fuel fired glass furnaces are of several different designs. When air is combusted with fuel, the air is typically preheated in regenerative or recuperative heat exchangers to preheat the combustion air utilising some of the waste heat exiting the furnace. When nominally pure oxygen is used for combustion, no waste heat recovery equipment is typically involved. Such furnaces are termed oxyfuel fired.

While the rotary heat exchanger could be advantageously applied to any of the glass production schemes, its benefits are greatest in the case of oxyfuel fired furnaces. This is because exhaust gas temperatures are higher, thus batch and cullet can be preheated to high temperatures, and because reduction in fuel requirements for the furnace is accompanied by a proportional reduction in the oxygen supply (and thus cost) for the furnace.

Exhaust gases from oxyfuel fired soda lime glass furnaces necessarily contain sodium sulfate (Na₂SO₄) particulate matter of submicron size (< 1.0 µm diameter). Sodium sulfate condenses into aerosols in the exhaust gases at temperatures below 900°C. They solidify to solid dust particles at temperature below 880°C. Exhaust gas constituents are typically about 60% water vapor (vol %), and 30% carbon dioxide (vol %). The remaining 10% is a combination of oxygen (O₂), nitrogen (N₂), Argon (Ar) and other minor components. Other minor gaseous components are sulphur dioxide and sulphur trioxide in quantities 10 - 1000 ppm, being generated as pollutants from the glass raw materials. These prove to be very important because their presence will lead to the reaction of sodium sulfate (solid) dust particles into sodium bisulfate (liquid) at certain temperatures according to the chemical equation:

Na₂SO₄ (s) + H₂O (g) + SO₃ (g) → 2NaHSO₄ (l)

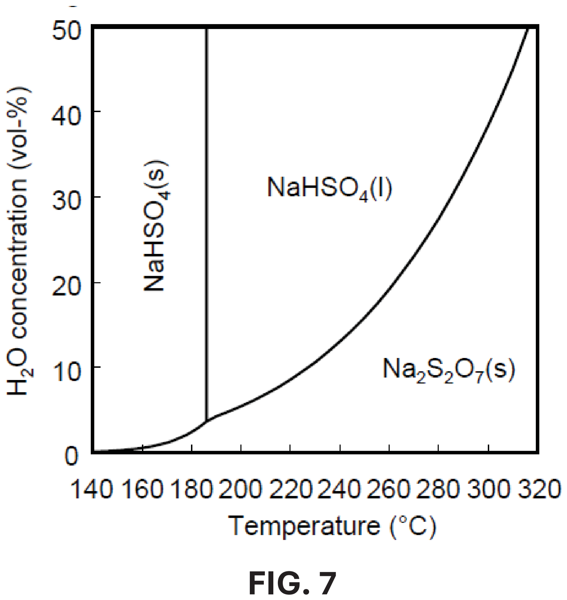

The reaction will proceed until the SO₃ (g) in the gas stream is exhausted. The result will be a mixture of sodium sulfate solid particles with sodium bisulfate liquid (molten) coating. The reaction product sodium bisulfate (NaHSO₄) can be a solid or liquid depending upon the temperature and H₂O concentration according to the graph of FIG. 7A. For the situation encountered in the rotary preheater on oxy-fuel exhaust gases with H₂O concentration of 60%, we would typically have the reaction product be a liquid for temperatures between 187°C and 350°C. Above 350°C, the sodium bilsulfate reacts and solidifies into sodium pyrosulfate (Na₂S₂O₇). Below 187°C, the molten sodium bisulfate freezes into solid sodium bisulfate.

A critical issue with performance of any indirect heat exchanger using hot gases contaminated with dust as the source of heat is build-up of dust on the gas side surfaces of the heat exchanger. Dust deposits on the surface significantly reduce the amount of heat transferred through the surface; the amount of heat transferred in the device can be reduced from 2x to 4x compared to initial clean surface performance. Effective surface cleaning technology is fundamental to device performance, and is often a difficult task.

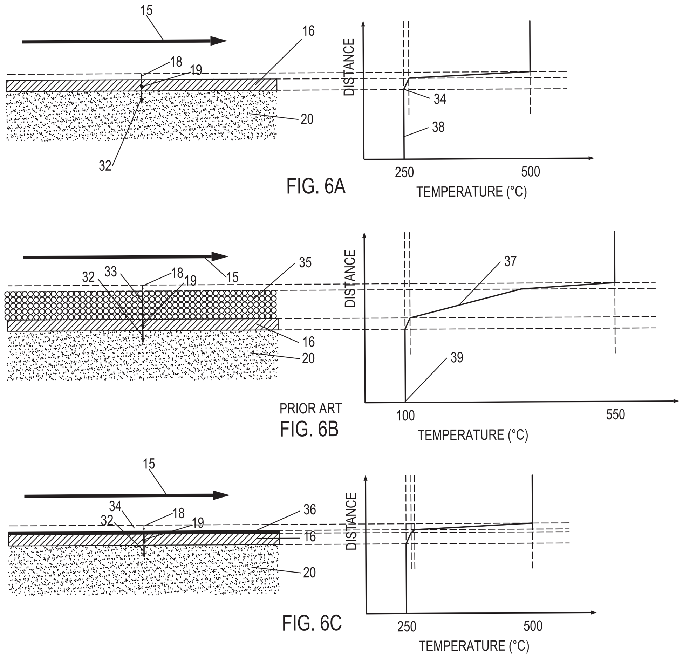

Reference is made to FIG. **6A** and **6B** to discuss the importance of dust deposits to heat transfer. FIG. **6A** represents the "clean surface" case with clean heat transfer surface. Hot gases **15** flow past metallic sheet **16.** A gas flow boundary layer is formed immediately adjacent to the metallic surface. Material **20** to be heated is on the other side of the metallic sheet. In the rotary heat exchanger, the material **20** is frequently mixed due to the rotation and sliding action inside the chamber **21.** Then the material temperature **38** is uniform with depth into the material. Temperature **34** at the metallic sheet surface is then the same as the mixed material **38.**

Heat is transferred to the material in three steps. First, heat is transferred at **18** from the main gas flow **15** to the edge of the metallic sheet through the gas flow boundary layer **34.** Second, heat is transferred at **19** through the metallic sheet. The stainless-steel metallic sheet has high thermal conductivity and is thin, so the heat transfer rate at **19** is also high. Third, heat is transferred at **32** into the material **20** at a high rate because the material **20** is well mixed. The overall rate of heat transferred is limited by the slowest of the three steps. For the rotary heat exchanger, the limiting step is the first at **18.** Heat transfer at **19** through the metal sheet and into the material at **32** are relatively fast.

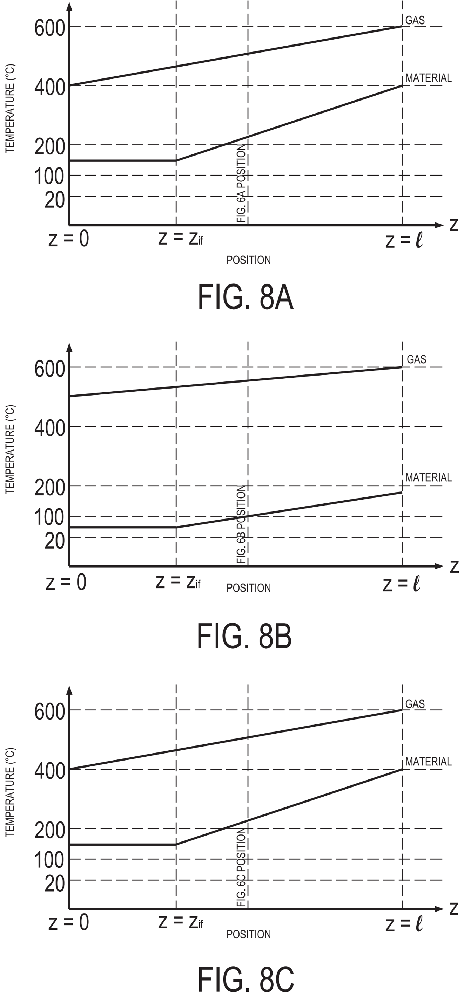

Graph of temperature vs. distance shows that hot gas temperature (500°C in this example) is maintained up to the edge of the boundary layer **34.** Then temperature drops significantly (to approx. 275°C) across the boundary layer **34.** Then the temperature (250-275°C) of the metal sheet **16** will be close to the temperature (250°C) of the material **20.** FIG. **8A** is a graph of temperature vs. longitudinal position in the chamber for the hot gas and material for the "clean" surface operation described above. With a typical rotary heat-exchanger, material temperatures up to 400°C can be achieved with "clean surfaces" because of the high heat transfer rate. These temperature relationships are monotonic. The temperature differences are referenced to the material temperature 20 (in this case 250 °C). Specifically 400-250=150 is 60% of 500-250=250; thus for a gas flow temperature of 600 °C, this temperature would be T-250 = 60%*(600-250), or T = 460 °C.

FIG. **6B** depicts operation without the subject apparatus embodiment a few hours after operation commences. A layer **35** of sodium sulfate dust particles accumulates on the metallic sheet **16** and presents an additional step **33** for the heat transfer. The layer **35** is comprised of a multitude of individual dust particles coated with liquid sodium bisulfate. The liquid (molten) sodium bisulfate acts like a glue to hold the particle layer together and makes cleaning of the metallic sheet surface difficult. The limitation is the transfer of heat from particle to particle across the small contact points between two adjacent dust particles. This layer **35** limits overall heat transfer from flowing gases **15** to material **20.** The low heat transfer rate is due to the morphology and thickness of the layer. Graph of temperature vs. distance reflects the additional temperature drop across the dust layer and reduced material temperature (125°C) as a result. Then, the temperature **39** of the material at the same position in the chamber is significantly decreased for this case. The dust layer renders the device inefficient. FIG. **8B** is a graph of temperature vs. longitudinal position in the chamber for the hot gas and material for the "dust-layer" operation described above. When the metallic surface is coated with dust, the heat transfer is significantly reduced, and material can only be heated up to 175°C when the hot gas temperature is 500°C.

It is therefore an object of embodiments disclosed herein to improve the heat-exchange performance of indirect heat exchangers.

It is a further object of embodiments disclosed herein to provide an apparatus and method that minimizes or eliminates the build-up of particles on a heat-exchange surface, such as on a surface of a heat exchange tube.

It is a still further object of embodiments disclosed herein to provide a rotary heat exchanger in a glass production scheme to preheat batch and cullet material efficiently.

It is yet a further object of embodiments disclosed herein to provide a system for preheating batch and cullet material using exhaust gases from an oxyfuel fired glass production furnace that reduces fuel requirements for the furnace.

### SUMMARY

The preferred embodiment disclosed is an improvement on U.S. patent Application Serial No. 17/880,256, entitled Rotary Batch and Cullet Preheater System and Method, and U.S. Patent No. 12,084,375, entitled Rotary Batch Preheater, by the same inventor, the disclosures of which are hereby incorporated by reference. Descriptions made there should be used as reference to this patent application.

In certain embodiments, the rotary batch and cullet preheater (heat-exchanger) system may be comprised of:
1. Gas Inlet and outlet plenums to direct hot gases through one or more heat exchanger tubes in a rotatable chamber.
2. The hot gases containing sodium sulfate dust particles, sulfur dioxide, sulfur trioxide, and significant quantities of water vapor (typically about 60% of the hot gases from oxyfuel fired furnaces and about 15% from air fuel fired furnaces (on a volume/volume basis)).
3. A rotatable chamber configured to contain a quantity of the material to be heated.
4. The rotatable chamber including one or more tubes for hot gases to flow through, heat being transferred from the hot gases, through one or more tube walls of the one or more tubes and into the material in the rotatable chamber.
5. The rotatable chamber and one or more tubes being inclined at an angle from horizontal.
6. Bars in each tube that in certain embodiments:
   a. extend the full length of each tube;
   b. are free to move inside each tube;
   c. have rounded edges;
   d. have a stopper bar on the high end of the bar that prevents the bar from falling out of the tube, especially when the tube is inclined relative to horizontal; and
   e. are flat or planar or are substantially flat or planar.
7. An infeed hopper configured and positioned or positionable to be periodically supplied with material from other sources.
8. An infeed screw feeder configured to receive material from said infeed hopper and discharge material to the interior of the rotatable chamber, said screw feeder including a feeder such as a rotatable auger.

In certain embodiments, disclosed is a rotary heat-exchanger, comprising:
a. a gas inlet, a gas outlet spaced from the inlet, and a region between the gas inlet and the gas outlet;
b. a rotatable chamber positioned in the region;
c. at least one heat exchange tube in the rotatable chamber in fluid communication with the gas inlet and the gas outlet, the at least one heat exchange tube having a tube length defined between a first tube end and a second tube end spaced from the first end, and having an inside tube diameter and an outside tube diameter;
d. a first tube plate attached to the first end of the at least one tube and a second tube plate attached to the second end of the at least one tube, and an outlet attached to the second tube plate and in communication with the rotatable chamber;
e. a feeder in communication with the rotatable chamber, the feeder comprising a feeder housing configured to discharge material into the rotatable chamber; and
f. at least one bar in the at least one heat exchange tube, the at least one bar having a bar length greater than the tube length and being free to move in the at least one heat exchange tube upon rotation of the rotatable chamber.

In certain embodiments, the at least one bar has a width along the bar length, and the width is less than the inside tube diameter.

In certain embodiments, the at least one bar has first and second ends and comprises a stopper at the first end, the stopper having a dimension greater than the outside tube diameter.

In certain embodiments, the stopper is positioned outside an internal lumen of the at least one tube.

In certain embodiments, there are a plurality of heat exchange tubes, and a plurality of bars, each of the plurality of bars being positioned in a respective one of the plurality of heat exchanger tubes, In certain embodiments, the number of bars equals the number of tubes.

In certain embodiments, the at least one bar has radiused edges.

In certain embodiments, the at least one bar is planar or flat along its length.

In certain embodiments, disclosed is a method of minimizing the build-up of particulate matter on a surface of a heat exchange tube in a rotatable heat exchanger configured to receive gas, the method comprising:
moving a bar positioned in the heat exchange tube having a tube length and a tube inside surface, the bar having a bar length greater than the tube length and being free to move in the heat exchange tube upon rotation of the rotatable chamber, wherein the movement of the bar causes the dislodging of particulate matter accumulated on the tube inside surface.

In certain embodiments, the particulate matter comprises
sodium sulphate.

In certain embodiments the gas contains sulphur trioxide and water vapor.

In certain embodiments, the method includes maintaining the gas within a temperature range of 187°C and 350°C.

### BRIEF DESCRIPTION OF THE DRAWINGS

The above and other aspects of the preferred embodiment will now be described in further detail, by way of example only, with reference to the accompanying drawings, in which:
FIG. **1** is a schematic of the rotatable preheater (heat-exchanger) system in accordance with certain embodiments;
FIG **2****.** is an isometric view of the rotatable chamber part of the system in accordance with certain embodiments;
FIG. **3** is a diagram of a bar in accordance with certain embodiments;
FIGS. **4** is a diagram showing action of the bar as the rotatable chamber with tubes is rotated, in accordance with certain embodiments;
FIG. **5** is a magnified view of a bar inside a tube in accordance with certain embodiments;
FIGS. **6A, 6B** and **6C** are diagrams illustrating heat transfer dynamics for clean surface, dust covered surface and solidified layer scenarios;
FIG. **7** is a graph showing how the stability of molten sodium bisulfate depends on the water vapor pressure and temperature; and
FIGS. **8A, 8B,** and **8C** are graphs of hot gas and material temperature vs. longitudinal position in the chamber in accordance with certain embodiments.

### DETAILED DESCRIPTION

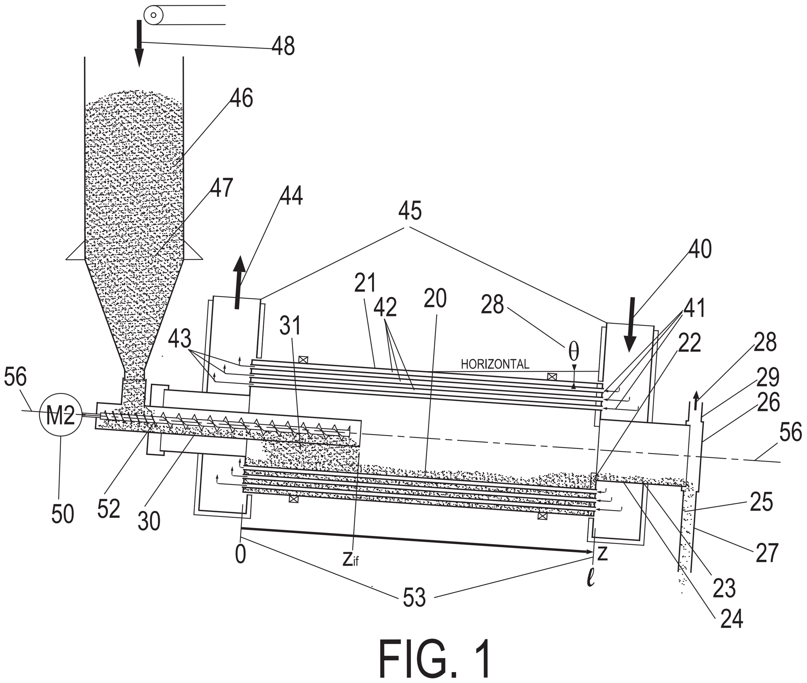

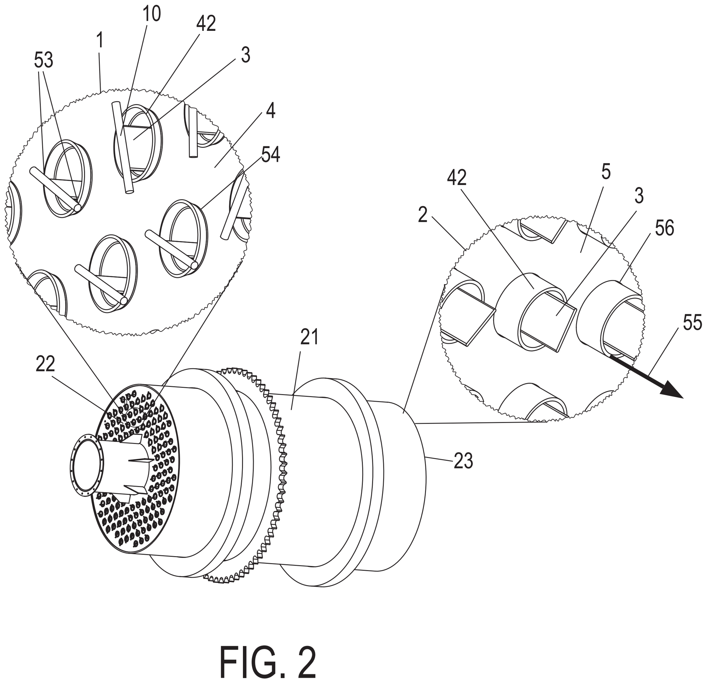

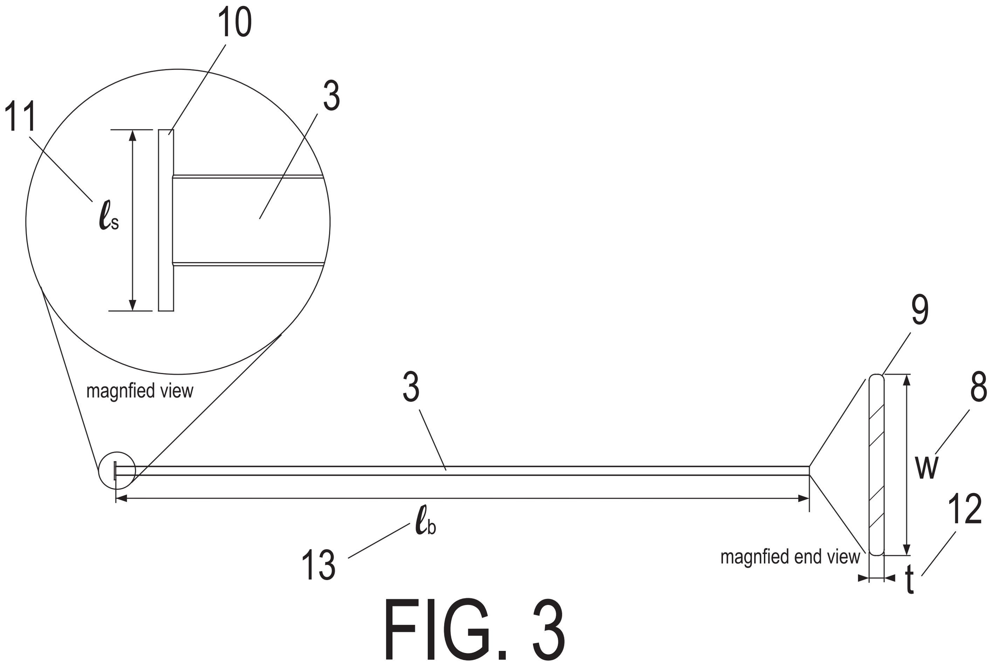

FIG. **1** shows a rotatable tube heat exchanger in accordance with certain embodiments. The rotatable chamber **21** is shown containing material **20.** In operation, the chamber is continuously being loaded at **31** by an infeed screw feeder **30.** One or more shovels **22** may be provided to lift material from the chamber and deposit it in the outlet cylinder **24** as depicted at **23.** Thus the shovels **22** may be configured and positioned to aid in lifting material **20** from the rotatable chamber **21** and depositing it at **23** in outlet cylinder **24.** In certain embodiments a shovel **22** may be an elongated L-shaped portion terminating in a free end with a flange that cooperates with the elongated L-shaped portion to create a scoop or shovel. The material **20** travels along the bottom of outlet cylinder **24** until it drops off the end of the cylinder **24** as depicted at **25.** Rotatable chamber **21** is inclined at an angle θ to the horizontal shown at **28.** Then one or more heat exchange tubes **42** in the rotatable heat exchanger will also be inclined at the same angle. The incline is critical as it allows elongated bars **3** (FIGS. **2** and **3****)** to move freely within the tubes (e.g., due to the rotation of the tube 42 and gravity) as discussed in greater detail below. A stopper bar **10** prevents the bars **3** from falling out of the tubes despite the incline. In certain embodiments, each stopper bar **10** is coupled to or integral with an end of a respective bar **3,** is preferably perpendicular to the bar length so as to form a "T" shape, has a dimension (e.g., a length) greater than the largest inside diameter of the tube **42** in which the bar 3 is contained, and is positioned outside of the tube **42,** as best seen in FIG. **2****.** Typical incline angles will be between 1° and 5° from horizontal, inclusive, in operation of the apparatus.

We define longitudinal length **53** along the chamber **21** by position z, with z=0 at the material infeed end and z=l at the material outfeed end. Hot inlet gases **40** enter the heat exchanger **45** at z=l and are passed **41** through the one or more tubes **42** of rotating chamber **21.** Each tube has an internal lumen or cavity for flow of gases. Cooled gases exit **43** the tubes at z=0 and are directed out of the heat exchanger as shown by arrow **44.** Material at **31** is fed into the chamber **21** distributed along an infeed length between z=0 and z=z_{if}. In certain embodiments, infeed material at **31** is at initial temperature 20°C but due to the distributed infeed along infeed length z_{if}, the material in the chamber between z=0 and z=z_{if} will be at a uniform higher temperature. As material is heated in the device, water is boiled from the material and water vapor is added to the inside of the rotating chamber, building pressure inside. Discharge plenum **26** serves to collect the discharged material mixture **25** and direct it to chute **27.** This plenum **26** is sealed to discharge cylinder **24** to prevent air infiltration or leakage out of water vapor. The pressure generated by creation of water vapor causes water vapor **28** (steam) to be vented from the port **29.**

After the water is evaporated from the material **20** in rotatable chamber **21,** heat transferred from flowing hot gases **41, 43** will provide sensible heat to the material **20** and the temperature of material **20** will increase. As the temperature of material **20** increases, impurities from the Post-Consumer Recycle cullet in the material will volatilize, creating organic fumes and aerosols. The organic fumes and aerosols will accumulate inside rotating chamber **21** and be vented **28** along with water vapor out of port **29.** If material **20** is heated to greater than 300°C, virtually all the organic impurities in the Post-Consumer Recycle cullet will be volatilized into organic fumes and aerosols and the heated material mixture **6** fed into the furnace will be essentially free of organic impurities.

With reference to FIG. **6B** and FIG. **6C****,** a preferred embodiment is an apparatus that removes a loose dust layer **35** (shown in FIG, **6B****)** and creates a liquid or solid layer **36** (shown in FIG. **6C****)** tightly adhered to the sheet **16,** which is preferably metallic or is comprised of other thermally conductive material. Because this layer is liquid or solid and tightly adhered to the sheet **16,** its thermal resistance will be low, and its temperature will be nearly that of the sheet **16.** FIG. **8C** shows the material and hot gas temperatures along the length z **53** of the chamber in accordance with certain embodiments. In practice the temperature of the metallic sheet **16** (which are the walls of metallic tubes **42)** will range from about 150°C at the material inlet end to about 400°C at the material outlet end. The layer **36** created is sodium bisulfate transferred from the loose dust layer **35.** At the typical temperatures and hot gas water concentration, we see from FIG. **7** that this layer will typically be molten (liquid) sodium bisulfate. At the hot end z = l, the temperature might be high enough to transform the sodium bisulfate to solid sodium pyrosulfate. The thermal conductivity of this thin layer **36** is high and will not limit the heat transfer efficiency of the device. The graph of temperature vs. distance is nearly unchanged from the clean surface case of FIG. **6A****.** Then the resulting overall heat transfer rate of FIG. **6C** is nearly that of the clean sheet rate of FIG. **6A****.** FIG. **8C** shows the hot gas and material temperatures for this case and are effectively the same as the "clean surface" case of FIG. **8A****,** with material temperature discharge at 400°C.

FIG. **2** is a depiction of an embodiment of the rotatable chamber portion of the rotary tube preheater. In operation the chamber **21** is oriented so as to have a high end **22** and a low end **23** (e.g., relative to horizontal). The expanded view at the left side of the FIG. **2** shows a detail view of the high-end chamber end plate **4** and the detail view at the right side of the low-end chamber shows end plate **5.** Tubes **42** protrude from either end plate through respective holes in the end plates. Tubes are generally fixed at **54** to the high-end end plate **4** and are free to expand in the direction of arrow **55** through the low-end end plate **5.** The expansion is the result of thermal expansion of the tube **42** when it is exposed to hot gases flowing through its interior. Gap **56** (e.g., 0.1 mm) between each tube and respective end plate holes is small enough that no material can spill through. Bars **3** extend through respective tubes **42** and each bar **3** is longer than the length of the tube **42** that it occupies. In certain embodiments, the number of bars **3** is equal to the number of tubes **42.**

As hot gases **41** flow through the inside of tubes **42,** sodium sulfate dust is deposited on the inside surface of the tubes. Sodium bisulfate liquid will also deposit in this layer. Over time, the resulting buildup of dust will impede heat transfer to the material.

Certain embodiments of the elongated bar **3** are further detailed in FIG. **3****.** In certain embodiments, bar **3** is of width w **8,** which is necessarily less than the internal diameter ID **14** of the tubes, and is of length l_{b} **13,** which is longer than length l of tube **42.** Bars **3** are preferably flat or planar and have radiused edges **9,** radius typically ¼ to ½ the thickness t **12** of the bar. In certain embodiments, the bar may be made of a rigid solid material. Preferably the bar is of stainless steel. In certain embodiments, one end of the bar **3** is configured with a stopper bar **10,** which can be integral or coupled to the bar 3 by any suitable means. The stopper bar **10** has a dimension, such as length lₛ **11,** greater than the ID **14** of the tubes so that the stopper bar **10** cannot enter the internal lumen or cavity of the tube **42.**

Typical dimensions are:
Tube length = 5000 mm
Tube ID = 80 mm
Bar length = l_{b} = 5020 mm
Stopper bar length = lₛ = 120 mm
Width = w = 60 mm
Thickness = t = 10 mm
Edge radius = 4 mm

Due to the incline angle θ **28** of the chamber **21** and tubes **42,** as they rotate, the bars **3** tend to migrate downhill, from the high-end of the tubes to the low-end (relative to horizontal). The stopper bar **10** rides at **53** (FIG. **2****)** on the exposed edge of the tube high end, preventing the travel, e.g., preventing the bar **3** from sliding longitudinally into the tube **42.**

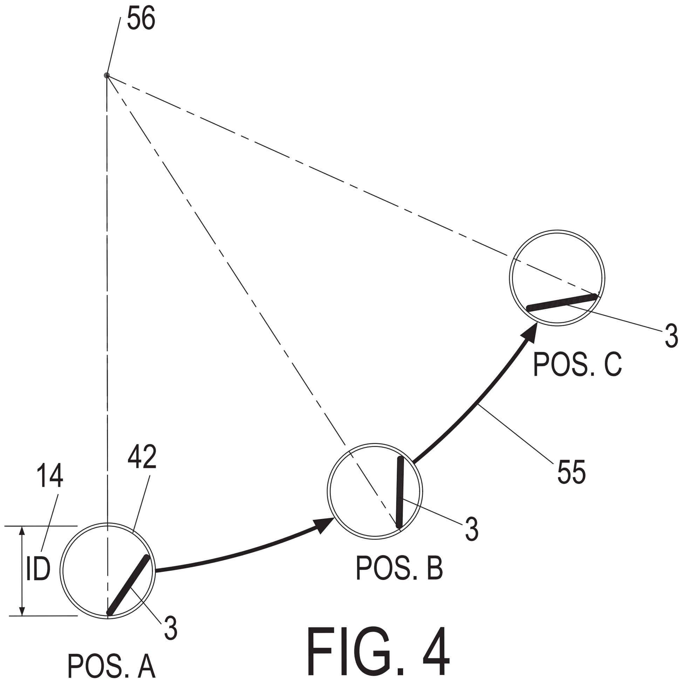

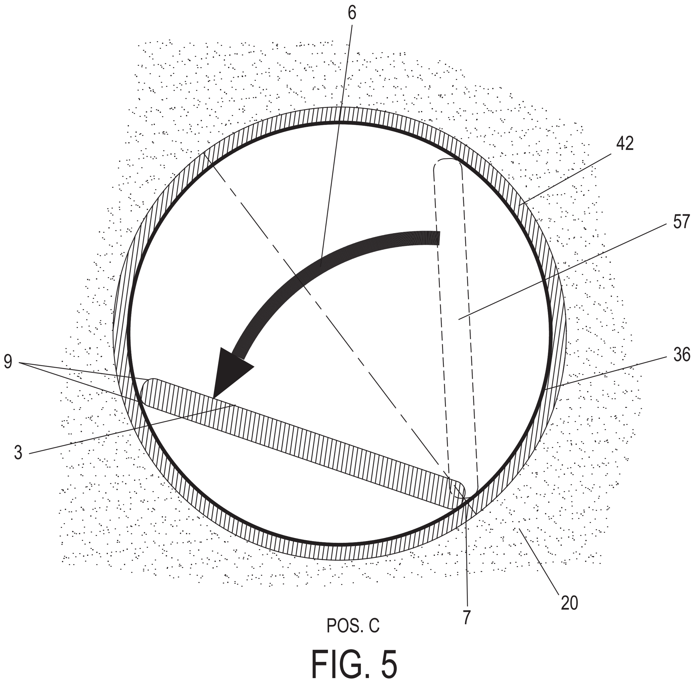

The preferred embodiment of FIG. 1 shows the chamber **21** rotating around axis **54.** FIG. **4** and FIG. **5** depict the movement of a bar **3** as the chamber **21** with tubes **42** is rotated about axis **56,** which appears as the point in FIG. **4****.** Exterior of tubes **42** are in contact with material **20** present in the rotatable chamber **21.** In Pos. **A** shown in FIG **4****,** the bar **3** leans to the right inside tube **42.** After some rotation of the tube **42** around axis **54** the tube reaches Pos. **B,** and the bar **3** is nearly vertical. In certain embodiments the bar **3** does not slide inside the tube as it rotates because of the liquid sodium bisulfate layer **36** inside the tube adheres the radiused edge of the bar to the tube due to friction. Instead the bar **3** remains in fixed position relative to tube **42.** As the chamber continues to rotate from position B, bar **3** becomes vertical. As soon as the chamber rotates enough to make bar **3** go past vertical, the bar **3** will flop **6** to a new position relative to tube **42** as shown in FIG. **5****.** The position of bar **3** prior to flopping is shown as **57.** Position C shows the bar in the new position after flopping. As the chamber **21** continues to rotate, bar **3** is carried to a new vertical position. As the rotation carries it past vertical, it will again flop **6.** Depending on the relationship between the tube **42** inside diameter **14** and the bar width **8,** the bar may flop more than once per revolution of the chamber.

As the bar flops to the new position, it dislodges dust particles **35** from the metallic tube **42** inside surface mechanically. Thus, each bar **3** is arranged in a respective tube lumen to independently flop within the tube **42** in a direction counter to the tube rotation. With the dust layer removed, molten sodium bisulfate will remain adhered to the inside of the tube **42,** forming layer **36.** At the hotter end of the tube, this may transform into solid sodium pyrosulfate.

The bar **3** is exposed to the flowing hot gases on all its sides, so it will be at the temperature of the gases. These gases are typically inlet 600°C and outlet at 400°C, above the temperature at which sodium bisulfate is converted to sodium pyrosulfate. As depicted in FIG. **5****,** when bar **3** flops as illustrated by arrow **6,** the radius edge **9** rolls at **7** over the inside of the pipe. The radiused edge enhances heat transfer from the bar to the molten layer by providing increased surface area. Any material between the radiused edge of the bar and the inside of the pipe will be compressed. As the bar **3** rolls **7** over the layer **36** of molten sodium bisulfate, the hotter bar will cause the molten sodium bisulfate to change (see FIG. 7A) to sodium pyrosulfate (Na₂S₂O₇) solid according to reaction:

2 NaHSO₄ (l) → Na₂S₂O₇ (s) + H₂O (g).

Any sodium pyrosulfate that is created will be solid (not liquid). Much like frazil ice is formed if water is agitated while freezing, this sodium pyrosulfate will solidify into fragmented pieces because it is under the compression agitation of the bar **3** as it rolls **7.** These solid fragmented pieces will be carried away with the flowing gases **15** and prevent excessive build up of thickness of layer **36.**

Layer **36,** being liquid and thin, presents little resistance to heat transfer, so the device maintains nearly its clean surface heat transfer efficiency, as depicted in FIG. **8C****.**

This action of the bar rolling on the inside of the tube is repeated several times per minute as the chamber rotates. Each time the bar **3** flops **6,** sodium sulfate dust particles are dislodged, molten sodium bisulfate is converted to fragmented sodium pyrosulfate pieces, and the pieces are carried away with the flowing gases. A stable thickness layer **36** of molten sodium bisulfate is realized. This layer **36** build up to a stable thickness, generally less than 0.5 mm thick. Layer **36** also acts as a protective layer to prevent wear on the inside of the tube and a cushion to protect against abrasion to the bar **3.**

## Claims

1. A rotary heat-exchanger, comprising:
a. a gas inlet, a gas outlet spaced from said inlet, and a region between said gas inlet and said gas outlet;
b. a rotatable chamber positioned in said region;
c. at least one heat exchange tube in said rotatable chamber in fluid communication with said gas inlet and said gas outlet, said at least one heat exchange tube having a tube length defined between a first tube end and a second tube end spaced from said first end, and having an inside tube diameter and an outside tube diameter;
d. a first tube plate attached to said first end of said at least one tube and a second tube plate attached to said second end of said at least one tube, and an outlet attached to said second tube plate and in communication with said rotatable chamber;
e. a feeder in communication with said rotatable chamber, said feeder comprising a feeder housing configured to discharge material into said rotatable chamber; and
f. at least one bar in said at least one heat exchange tube, said at least one bar having a bar length greater than said tube length and being free to move in said at least one heat exchange tube upon rotation of said rotatable chamber.

2. The rotary heat-exchanger of claim 1, wherein said at least one bar has a width along said bar length, and wherein said width is less than said inside tube diameter.

3. The rotary heat-exchanger of claim 1, wherein said at least one bar has first and second ends and comprises a stopper at said first end, said stopper having a dimension greater than said outside tube diameter.

4. The rotary heat-exchanger of claim 3, wherein said stopper is positioned outside an internal lumen of said at least one tube.

5. The rotary heat-exchanger of claim 1, wherein there are a plurality of heat exchange tubes, and a plurality of bars, each of said plurality of bars being positioned in a respective one of said plurality of heat exchanger tubes.

6. The rotary heat-exchanger of claim 5, wherein the number of bars equals the number of tubes.

7. The rotary heat-exchanger of claim 1, wherein said at least one bar has radiused edges.

8. The rotary heat-exchanger of claim 1, wherein said at least one bar is planar.

9. A method of minimizing the build-up of particulate matter on a surface of a heat exchange tube in a rotatable heat exchanger configured to receive gas, the method comprising:
moving a bar positioned in said heat exchange tube having a tube length and a tube inside surface, said bar having a bar length greater than said tube length and being free to move in said heat exchange tube upon rotation of said rotatable chamber, wherein the movement of said bar causes the dislodging of said particulate matter accumulated on said tube inside surface.

10. The method of claim 9, wherein said particulate matter comprises sodium sulphate.

11. The method of claim 9, wherein said gas contains sulphur trioxide and water vapor.

12. The method of claim 9, further comprising maintaining said gas within a temperature range of 187°C and 350°C for at least a portion of the tube length.
